# EUROPÄISCHE PATENTSCHRIFT

(11) **EP 2 500 200 B1**
(45) Veröffentlichungstag und Bekanntmachung des Hinweises auf die Patenterteilung: **30.04.2014**
(21) Anmeldenummer: 12153423.4
(22) Anmeldetag: 01.02.2012
(51) Int. Cl.: B60K 7/00

(54) **Antriebsvorrichtung zum Antreiben eines Rades für ein elektrisch antreibbares Fahrzeug**
Drive device for driving a wheel for an electric vehicle
Dispositif d'entraînement pour l'entraînement d'une roue pour un véhicule pouvant être entraîné de manière électrique

(30) Priorität: 16.03.2011 DE 102011005618
(43) Veröffentlichungstag der Anmeldung: 19.09.2012
(73) Patentinhaber: ZF Friedrichshafen AG, 88038 Friedrichshafen (DE)
(72) Erfinder: Mair, Ulrich, 88046 Friedrichshafen (DE); Heimann, Jens, 88719 Stetten (DE); Pollmeyer, Stephan, 88046 Friedrichshafen (DE)

(56) Entgegenhaltungen:
- EP-A1- 1 777 092
- WO-A2-98/35848
- DE-A1-102005 046 614
- GB-A- 2 055 338

## Beschreibung

Die vorliegende Erfindung bezieht sich auf eine Antriebsvorrichtung zum Antreiben eines Rades für ein elektrisch antreibbares Fahrzeug gemäß dem Oberbegriff des Patentanspruchs 1.

In der Regel entspricht die Anordnung des Antriebsstrangs bei elektrisch angetriebenen Fahrzeugen der Anordnung des Antriebsstrangs bei Fahrzeugen, welche einen Zentralantrieb, umfassend einen Verbrennungsmotor, aufweisen. Hierbei wird eine Antriebsvorrichtung, umfassend eine elektrische Maschine, ein Getriebe und ein Differenzial karosseriefest in der Fahrzeugmitte zwischen den Vorder- oder Hinterrädern angeordnet; das Abtriebsmoment wird wie bei konventionellen Zentralantrieben über Seitenwellen auf die angetriebenen Räder übertragen. Bei einer derartigen Anordnung des Antriebsstrangs bleibt das Fahrwerkkonzept weitestgehend erhalten, wobei lediglich Modifikationen der Aggregatelagerung und des Hilfsrahmens erforderlich sind.

Bei elektrisch angetriebenen bzw. antreibbaren Fahrzeugen, umfassend einen Zentralantrieb stellt die Batterieunterbringung einen erheblichen Eingriff in die Fahrzeugstruktur dar. Hierbei ist bekannt, die Batterie in den Unterboden, beispielsweise unter der Rücksitzbank oder im Bereich, der bei Zentralantrieben mit einem Verbrennungsmotor vom Getriebetunnel eingenommen wurde, zu integrieren.

Auch sind im Stand der Technik radnahe elektrische Antriebe bekannt, wobei unter radnahen Antrieben im Weiteren Antriebe verstanden werden, welche pro Antriebsrad des Fahrzeugs ein oder mehrere Elektromotoren vorsehen. So sind Fahrzeuge mit zwei oder mehreren Antriebsrädern bekannt, die eine entsprechende Anzahl an Antrieben, also zwei oder mehrere, aufweisen. Dabei kann jeweils ein Elektromotor auf genau ein Antriebsrad wirken.

Des Weiteren sind aus dem Stand der Technik radnahe elektrische Antriebe zum Antreiben eines Antriebsrades für elektrisch antreibbare Fahrzeuge bekannt, die in das Fahrwerk des Fahrzeugs integriert sind, wobei in Abhängigkeit von der Anzahl der angetriebenen Fahrzeugräder beispielsweise zwei oder vier elektrische Antriebe vorgesehen sind.

Hierbei können die elektrischen Antriebe radträgerfest angeordnet sein; in diesem Fall federt der elektrische Antrieb unmittelbar mit dem jeweiligen Rad mit und die ungefederte Masse wird durch den Antrieb direkt beeinflusst.

Eine weitere Möglichkeit der Anordnung der radnahen elektrischen Antriebe besteht darin, diese aufbaufest anzuordnen. Auich hierbei können die elektrischen Antriebe aus der Fahrzeugmitte heraus hin zu den Rädern rücken.

Ferner können die elektrischen Antriebe lenkerfest angeordnet sein, wobei sie in diesem Fall an den Fahrwerkslenkern, beispielsweise am Verbundlenker befestigt sind. Durch diese Konzeption wird die ungefederte Masse reduziert, indem die elektrischen Antriebe nahe am aufbaufesten Lenkeranbindungspunkt angeordnet werden.

Aus der DE 10 2007 039 059 A1 der Anmelderin ist eine als Verbundlenkerachse ausgeführte angetriebene Fahrzeugachse bekannt, bei der für jedes Rad der Achse ein Elektromotor vorgesehen ist, welcher mit der Drehachse in Fahrzeuglängsrichtung angeordnet ist, wobei dessen Gehäuse einen Teil der Längsschwinge der Verbundlenkerachse darstellt.

Radnahe Antriebe können bei Fahrzeugen mit Allrad-, Front-, oder Heckantrieb vorgesehen sein, wobei die Achstypen der angetriebenen Fahrzeugachsen konventionelle Achstypen, wie z.B. Federbein - oder Doppelquerlenkerachstypen sein können. Ferner können radnahe Antriebe in radintegrierte Fahrwerke integriert sein.

Des Weiteren können die radnahen elektrischen Antriebe ein Getriebe aufweisen.

Aus der EP 1 961 602 A1 ist eine in ein Fahrzeugrad integrierbare Antriebsvorrichtung zum Antreiben des Rades bekannt, welche einen Elektromotor und zwei in Reihe geschaltete Planetengetriebe aufweist, die axial betrachtet zwischen dem Elektromotor und dem Rad angeordnet sind.

Aus der DE 10 2005 034 278 A1 ist eine Antriebsvorrichtung für ein Rad einer Federbeinachse bekannt, welche eine elektrische Maschine und ein nachgeschaltetes Kegelradgetriebe aufweist. Eine weitere Antriebsvorrichtung für ein Rad einer Fahrzeugachse umfassend eine elektrische Maschine und ein Kegelradgetriebe geht aus der JP 2008155694 A hervor.

In vorteilhafter Weise resultiert die Verwendung von radnahen elektrischen Antrieben zum Antreiben eines Rades einer angetriebenen Achse beim Fahrzeugaufbau in einer hohen Flexibilität, da sich durch den Entfall des zentralen Antriebs in der Fahrzeugmitte neue Freiheitsgrade bei der Fahrzeuggestaltung, insbesondere bei der Gestaltung des Fahrzeuginnenraums, der Batterieunterbringung und der Crash-Sicherheit ergeben.

Zudem können durch radnahe elektrische Antriebe radindividuelle Antriebsmomente erzeugt werden, wodurch Funktionen wie Torque Vectoring, ESP, ABS, ASR etc. auf einfache Weise realisiert werden können. Durch die schnelle und genauere Regelbarkeit von elektrischen Antrieben können diese Funktionen im Vergleich zu herkömmlichen bremsenbasierten Regelsystemen optimiert werden.

Eine gattungsgemäße Antriebsvorrichtung ist aus GB 2 055 338 bekannt.

Der vorliegenden Erfindung liegt die Aufgabe zugrunde, eine Antriebsvorrichtung zum Antreiben eines Antriebsrades für ein elektrisch antreibbares Fahrzeug anzugeben, wobei eine Federung der Antriebsräder ermöglicht werden soll.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Antriebsvorrichtung zum Antreiben eines Antriebrades für ein elektrisch antreibbares Fahrzeug vorgeschlagen, umfassend eine elektrische Maschine und eine in Kraftflussrichtung im Zugbetrieb betrachtet abtriebsseitig der elektrischen Maschine angeordnete Getriebeeinheit, wobei die Getriebeeinheit ein Kegelradgetriebe und ein Planetengetriebe aufweist.

Durch das Kegelradgetriebe kann dabei die Längsausrichtung der Antriebsvorrichtung der Längsausrichtung eines Längslenkers angepasst werden.

Im Rahmen einer ersten Ausführungsform der Erfindung sind das Planetengetriebe und das Kegelradgetriebe in Kraftflussrichtung im Zugbetrieb betrachtet in der Reihenfolge Planetengetriebe - Kegelradgetriebe angeordnet.

Alternativ können das Planetengetriebe und das Kegelradgetriebe in Kraftflussrichtung im Zugbetrieb betrachtet in der Reihenfolge Kegelradgetriebe Planetengetriebe angeordnet sein.

Vorzugsweise ist die elektrische Maschine hochdrehend ausgeführt, wobei die Getriebeeinheit eine hohe Übersetzung aufweist, so dass sich ein hohes Leistungs-/Gewichtsverhältnis (kW/kg) der Antriebsvorrichtung und eine kleine Dimensionierung der elektrischen Maschine ergeben.

Im Rahmen einer Weiterbildung der Erfindung kann ein Gehäuse der Antriebsvorrichtung direkt mit dem Längslenker der Verbundlenkerachse verbunden, vorzugsweise verschraubt, als in den Längslenker integriert oder mit dem Längslenker einteilig ausgeführt sein.

Bevorzugt ist die elektrische Maschine an dem Längslenker zwischen dem Anlagepunkt des Längslenkers an der Karosserie und dem Anlagepunkt des Rades an dem Längslenker angeordnet. So ist die elektrische Maschine zwar fest bezüglich des Anlagepunkts des Rades, wird jedoch nicht bei einem Einfedern des Rades über die volle Höhe vertikal mit dem Rad mitbewegt. Dies verringert die ungefederten Massen und verbessert somit das Fahrverhalten des Fahrzeugs.

Im Rahmen einer weiteren Ausgestaltung der Erfindung sind die Anbindung des Dämpfers und/oder der Feder und/oder der Bremse in das Gehäuse der Antriebsvorrichtung integriert.

Auf diese Weise wird eine kompakte Bauweise erzielt und es entfällt die Notwendigkeit separater Bauteile, was in einer Reduzierung der Kosten resultiert.

Bevorzugt ist die elektrische Maschine mit einem Gehäuse ausgestattet, welches insbesondere durch den Längslenker gebildet ist. Besonders bevorzugt ist die Antriebsvorrichtung mit einem Gehäuse versehen, welches insbesondere dreiteilig aufgebaut sein kann. Dabei kann in einem ersten Gehäuseteil, im Weiteren insbesondere Verbundlenkergehäuse genannt, die elektrische Maschine und das Planetengetriebe angeordnet sein. Dieses Gehäuse kann vom Längslenker gebildet werden.

Ein zweites Gehäuse, im Weiteren auch Zentralgehäuse genannt, kann insbesondere das Kegelradgetriebe beherbergen und dabei bevorzugt auch zur Befestigung der Feder und des Dämpfers dienen.

Ein weiterer Gehäuseteil, im Weiteren radseitiges Gehäuse genannt, beherbergt bevorzugt die Radnabe und dient zur Befestigung, insbesondere der lösbaren Befestigung, der Antriebsvorrichtung an dem Rad. Das radseitige Gehäuse kann auch das Planetengetriebe umschließen und/oder zur Befestigung der Bremse dienen.

Durch die Ausbildung des Gehäuses als mehrteiliges Gehäuse können die verschiedenen Teile der Antriebsvorrichtung in das Gehäuse eingebracht werden und durch Zusammenfügen der Teile an dem Gehäuse und/oder dem Rad und/oder dem Längslenker befestigt werden.

Auch kann durch eine lösbare Verbindung der einzelnen Gehäuseteile ein späterer Zugriff auf die einzelnen Teile der Antriebsvorrichtung ermöglicht werden und so ein Austausch und/oder eine Reparatur ermöglicht werden.

Bevorzugt kann die Motorwelle der elektrischen Maschine über eine Fest- /Loslagerung gelagert sein. Dabei kann das Festlager hinter der elektrischen Maschine in Richtung des Anlagepunkts des Längslenkers an der Karosserie die Welle der elektrischen Maschine lagern und das Loslager die Welle der elektrischen Maschine vor der elektrischen Maschine, also in Richtung der Radnabe lagern. Es sind aber auch umgekehrte Anordnungen möglich.

Weiter bevorzugt kann die Kegelradstufe mittels Kegelrollenlager gelagert werden. Bevorzugt wird dabei das Tellerrad mittels zweier Lager gehalten, während das Kegelrad über zumindest ein Lager der Welle der elektrischen Maschine abgestützt ist.

Durch die Kombination eines Planetengetriebes mit einem Kegelradgetriebe wird eine große Übersetzung ermöglicht, wobei die Abmessungen sowie das Gewicht der elektrischen Maschine und somit die ungefederte Masse gering gehalten werden können; beispielsweise kann die erzielbare Übersetzung einen Wert annehmen, der größer als 1:10 ist, bevorzugt 1:10 bis 1:20, besonders bevorzugt 1:14 bis 1:18, insbesondere 1:16. Hierbei wird unter einer Übersetzung das Verhältnis der Umdrehungsgeschwindigkeiten der Abtriebswelle des Getriebes zur Umdrehungsgeschwindigkeit der Antriebswelle des Getriebes verstanden. Die Aufteilung der erzielbaren Übersetzung auf die Getriebe kann symmetrisch oder asymmetrisch erfolgen. Vorzugsweise wird die Übersetzung derart aufgeteilt, dass das jeweilige Getriebe hinsichtlich des erforderlichen Bauraums und der Belastung optimiert wird.

Insbesondere können hochdrehende elektrische Maschinen verwendet werden. Unter einer hochdrehenden elektrischen Maschine wird eine Maschine verstanden, die eine maximale Rotorgeschwindigkeit von mehr als 15 000 Umdrehungen pro Minute, bevorzugt zwischen 19000 und 25 000 Umdrehungen pro Minute aufweist.

In vorteilhafter Weise ergibt die Kombination eines niedrigen Antriebsmomentes mit einer hohen Drehzahlausnutzung in Summe in Verbindung mit den beiden Getrieben der Antriebsvorrichtung ein hohes Leistungs-/Gewichtsverhältnis (kW/kg). Die elektrische Maschine kann, wie bereits erläutert, dadurch klein dimensioniert sein, was die Integration der elektrischen Maschine in den Längslenker ermöglicht bzw. vereinfacht.

Die Antriebsvorrichtung kann insbesondere mit einer Verbundlenker, Zentrallenker-, Schräglenker- oder Längslenkerachse kombiniert werden. Dabei wird unter einer Verbundlenkerachse unter Anderem eine Achse mit zwei Längslenkern und einem diese verbindenden Querträger verstanden. Unter einer Zentrallenkerachse wird eine Achse mit zwei Längslenkern verstanden, wobei jeder Längslenker mit zwei Querlenkern verbunden ist, die an der Karosserie befestigt sind. Eine Schräglenkerachse umfasst pro Rad eine in etwa dreieckige Schwinge, welche an den zwei Enden mit der Karosserie und am Scheitel mit dem Radträger verbunden ist. Eine Längslenkerachse ist eine Achse, welche pro Rad einen Längslenker vorsieht, der einerseits mit der Karosserie und andererseits mit dem Rad verbunden ist.

Die Erfindung wird im Folgenden anhand der beigefügten Figuren für den Fall einer Verbundlenker-Hinterachse beispielhaft näher erläutert, wobei für gleiche Bauteile dieselben Bezugszeichen verwendet werden. Es zeigen:
- Figur 1:: Eine schematische Draufsicht einer nach dem Stand der Technik ausgeführten Verbundlenker-Hinterachse;
- Figur 2:: Eine schematische Schnittansicht einer ersten Ausführungsform einer erfindungsgemäßen Antriebsvorrichtung für ein elektrisch antreibbares Fahrzeug;
- Figur 3:: Eine schematische Schnittansicht einer zweiten Ausführungsform einer erfindungsgemäßen Antriebsvorrichtung für ein elektrisch antreibbares Fahrzeug;
- Figur 4:: Eine schematische Schnittansicht einer weiteren Ausführungsform einer erfindungsgemäßen Antriebsvorrichtung für ein elektrisch antreibbares Fahrzeug; und
- Figur 5:: Eine perspektivische Ansicht einer Ausführungsform einer erfindungsgemäßen Antriebsvorrichtung zur Veranschaulichung der Anbindung des Dämpfers und der Feder in ein Gehäuse der Antriebsvorrichtung.

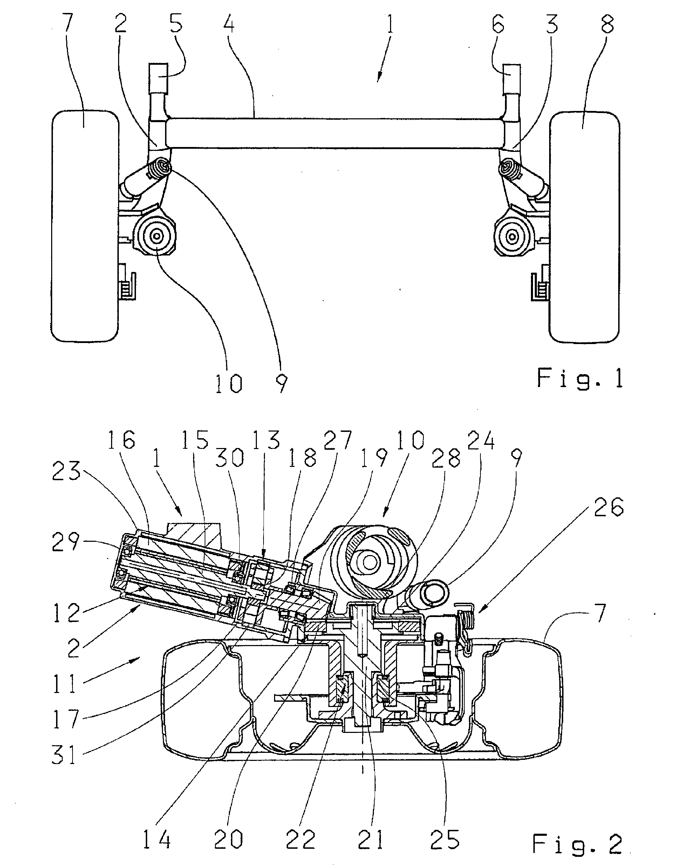

Die Erfindung wird anhand einer Verbundlenker-Hinterachse erläutert. Bezugnehmend auf Figur 1 umfasst eine nach dem Stand der Technik ausgeführte Verbundlenker-Hinterachse 1 zwei Längslenker 2, 3, welche durch ein Querprofil 4 miteinander verbunden sind.

Die Verbundlenker-Hinterachse 1 ist durch zwei Gummilager 5, 6 mit der Karosserie des Fahrzeugs verschraubt. Die Räder der Verbundlenker-Hinterachse 1 sind in der Figur mit den Bezugszeichen 7 bzw. 8 versehen. Ferner sind in der beigefügten Figur 1 mit 9 ein Dämpfer und mit 10 eine Feder der Achse 1 bezeichnet.

Bei der in Figur 2 gezeigten Ausführungsform der Erfindung ist eine Antriebsvorrichtung 11 zum Antreiben eines Rades 7 einer Verbundlenkerachse 1 eines elektrisch antreibbaren Fahrzeugs vorgesehen, welche eine elektrische Maschine 12 und eine in Kraftflussrichtung im Zugbetrieb betrachtet abtriebsseitig der elektrischen Maschine 12 angeordnete Getriebeeinheit umfasst, wobei die Getriebeeinheit ein Kegelradgetriebe 14 und ein Planetengetriebe 13 aufweist, die in Kraftflussrichtung im Zugbetrieb betrachtet in der Reihenfolge Planetengetriebe 13 - Kegelradgetriebe 14 angeordnet sind. Das Planetengetriebe 13 und das Kegelradgetriebe 14 sind bei dem gezeigten Beispiel an der dem Rad 7 zugewandten Seite der elektrischen Maschine 12 angeordnet.

Hierbei ist der Rotor 15 der elektrischen Maschine 12 über eine Sonnenradwelle, die als Motorwelle dient, mit dem Sonnenrad 17 des Planetengetriebes 13 drehfest verbunden, wobei der Steg 18 des Planetengetriebes 13 über eine Stegwelle mit dem Ritzel 19 des Kegelradgetriebes 14 verbunden ist und wobei der Abtrieb der Antriebsvorrichtung 11 über das Tellerrad 20 des Kegelradgetriebes 14 erfolgt. Im Rahmen weiterer, nicht dargestellter Ausführungsformen können der Antrieb und/oder der Abtrieb des Planetengetriebes 13 über jeweils ein weiteres Element des Planetengetriebes 14 erfolgen.

Der Radlagerzapfen 21 des Radlagers 22 kann als Träger für das Tellerrad 20 dienen, wobei das Tellerrad 20 mit dem Radlagerzapfen 21 verschraubt oder verschweißt werden kann, was in einer Gewichtsreduzierung resultiert. Das Hohlrad 31 des Planetengetriebes 13 ist gehäusefest angeordnet und kann mit dem Gehäuse 23 einstückig ausgeführt sein. Der Stator der elektrischen Maschine 12 ist in den Figuren mit dem Bezugszeichen 16 versehen.

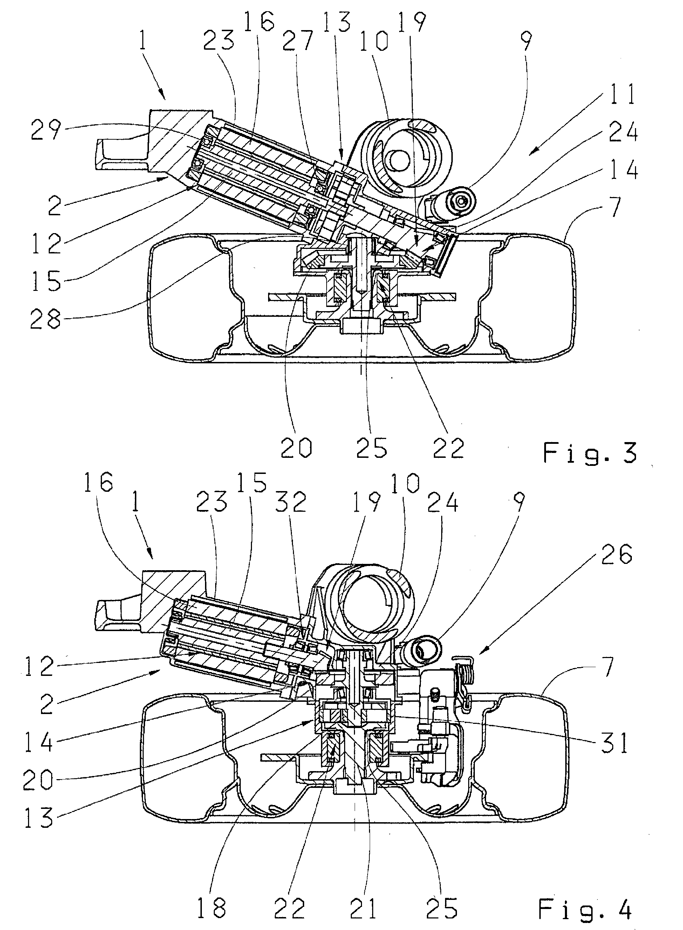

Bei dem in Figur 2 gezeigten Beispiel ist das Ritzel 19 des Kegelradgetriebes 14 an der der elektrischen Maschine 12 zugewandten Seite des Tellerrades 20 angeordnet. Im Rahmen einer weiteren Ausführungsform kann in Abhängigkeit von den Bauraumverhältnissen das Ritzel 19 an der der elektrischen Maschine 12 abgewandten Seite des Tellerrades 20 angeordnet sein. Diese Ausführungsform ist Gegenstand der Figur 3.

Das Gehäuse der Antriebsvorrichtung 11 ist vorzugsweise dreiteilig ausgeführt und umfasst ein verbundlenkerseitiges Gehäuse 23, ein Zentralgehäuse 24 und ein radseitiges Gehäuse 25, wobei im verbundlenkerseitigen Gehäuse 23 die elektrische Maschine 12 angeordnet ist. Bei dem in Figur 2 gezeigten Beispiel ist im verbundlenkerseitigen Gehäuse 23 auch das Planetengetriebe 13 angeordnet, wobei das Kegelradgetriebe 14 im Zentralgehäuse 24 angeordnet ist.

Gemäß einer Weiterbildung der Erfindung sind der Dämpfer 9 und die Feder 10 am Zentralgehäuse 24 befestigt. Am radseitigen Gehäuse 25 wird die gesamte Antriebsvorrichtung 11 verschraubt, wobei im Rahmen einer Weiterbildung vorgesehen sein kann, dass die Bremse 26 am radseitigen Gehäuse 25 befestigt sein kann, wie anhand Figur 2 veranschaulicht.

Zum Betrieb des Kegelradgetriebes 14 ist eine Lagerung mit hoher Steifigkeit erforderlich. Zu diesem Zweck wird bezugnehmend auf Figur 2 das Ritzel 19 des Kegelradgetriebes 14 fliegend über ein Kegelrollenlager 27 im Zentralgehäuse 24 gelagert. Ferner wird das Tellerrad 20 des Kegelradgetriebes 14 über eine Loslagerung 28 im Zentralgehäuse 24 und eine Festlagerung gelagert, wobei die Festlagerung durch das Radlager 22 gebildet ist, wodurch ein Lager eingespart werden kann. Bei dem in Figur 2 gezeigten Ausführungsbeispiel ist die elektrische Maschine 12 mittels einer Lagerung in X-Anordnung gelagert, umfassend Lager 29, 30. Eine Lagerung der elektrischen Maschine 12 mittels einer Lagerung in O-Anordnung und/oder eines Fest-/ Loslageranordnung ist ebenfalls möglich.

Das in Figur 3 gezeigte Ausführungsbeispiel einer erfindungsgemäßen Antriebsvorrichtung unterscheidet sich vom Ausführungsbeispiel nach Figur 2 dadurch, dass das Ritzel 19 des Kegelradgetriebes 14 an der der Antriebsvorrichtung 11 abgewandten Seite des Tellerrades 20 angeordnet ist.

Bei dem in Figur 4 gezeigten Beispiel sind das Kegelradgetriebe 14 und das Planetengetriebe 13 in Kraftflussrichtung im Zugbetrieb betrachtet in der Reihenfolge Planetengetriebe 13 - Kegelradgetriebe 14 angeordnet. Hierbei ist der Rotor 15 der elektrischen Maschine 12 mit dem Ritzel 10 des Kegelradgetriebes 14 verbunden oder einstückig mit dem Ritzel 19 ausgeführt, wobei das Tellerrad 20 über eine Welle mit dem Sonnenrad 17 des Planetengetriebes 13 verbunden ist, das Hohlrad 31 des Planetengetriebes 13 gehäusefest angeordnet ist und der Abtrieb des Planetengetriebes 13 über den Steg 18 erfolgt. Der Radlagerzapfen 21 des Radlagers 22 kann als Träger für den Steg 18 des Planetengetriebes 13 dienen, wobei der Steg 18 mit dem Radlagerzapfen 21 verschraubt oder verschweißt werden kann oder einstückig ausgebildet werden kann, was in einer Gewichtsreduzierung resultiert.

Bezugnehmend auf Figur 4 ist das Ritzel 19 des Kegelradgetriebes 14 an der der Antriebsvorrichtung 11 zugewandten Seite des Tellerrades 20 angeordnet. Im Rahmen einer weiteren, nicht dargestellten Ausführungsform kann für den Fall einer Anordnung des Kegelradgetriebes 14 und des Planetengetriebes 13 in Kraftflussrichtung im Zugbetrieb betrachtet in der Reihenfolge Kegelradgetriebe 14 - Planetengetriebe 13 in Anhängigkeit von den Bauraumverhältnissen das Ritzel 19 an der der elektrischen Maschine 12 abgewandten Seite des Tellerrades 20 angeordnet sein.

Bei dem Ausführungsbeispiel gemäß Figur 4 bildet eine Lagerung 32 des Ritzels 19 eine der Lagerungen der Motorwelle der elektrischen Maschine 12. Das Ritzel 19 kann direkt in der Motorwelle über eine Mitnahmeverzahnung gelagert werden.

Für den Fall, dass gemäß Figur 2 und Figur 3 das Kegelradgetriebe 14 und das Planetengetriebe 13 in Kraftflussrichtung im Zugbetrieb betrachtet in der Reihenfolge Planetengetriebe 13 - Kegelradgetriebe 14 angeordnet sind, kann im Rahmen einer nicht dargestellten Ausführungsform die elektrische Maschine 12 als Hohlwellenmotor, d.h. als Innenläufer mit einem als Hohlwelle ausgeführten Rotor 15 ausgeführt sein, wobei das Planetengetriebe 13 an der dem Rad 7 abgewandten Seite der elektrischen Maschine 12 angeordnet ist und die Stegwelle, die den Steg 18 des Planetengetriebes 13 mit dem Ritzel 19 des Kegelradgetriebes 14 verbindet, durch den Hohlraum des Rotors 15 der elektrischen Maschine 12 zum Ritzel 19 geführt wird.

Da das Gehäuse des Planetengetriebes 13 mit kleinerem Außendurchmesser ausführbar ist als das Gehäuse der elektrischen Maschine 12, kann durch eine derartige Anordnung der zur Verfügung stehende Bauraum optimal genutzt werden.

Die elektrische Maschine 12 der Antriebsvorrichtung 11 kann als Asynchronmaschine, als fremderregt- oder permanentmagnet-erregte Synchronmaschine oder als Querfeldmaschine ausgeführt werden, was eine hohe Flexibilität bietet.

Gemäß einer vorteilhaften Weiterbildung der Erfindung und bezugnehmend auf Figuren 2, 3 und 4 ist das verbundlenkerseitige Gehäuse 23 der Antriebsvorrichtung 11 direkt mit dem Längslenker 2 der Verbundlenkerachse 1 verbunden, vorzugsweise verschraubt. Alternativ kann das verbundlenkerseitige Gehäuse 23 beispielsweise als mehrteiliges Schweißbauteil in den Längslenker 2 integriert werden oder mit dem Längslenker 2 einteilig ausgeführt sein. Ferner kann die elektrische Maschine 12 wie eine Patrone in den Längslenker 2 eingefügt werden.

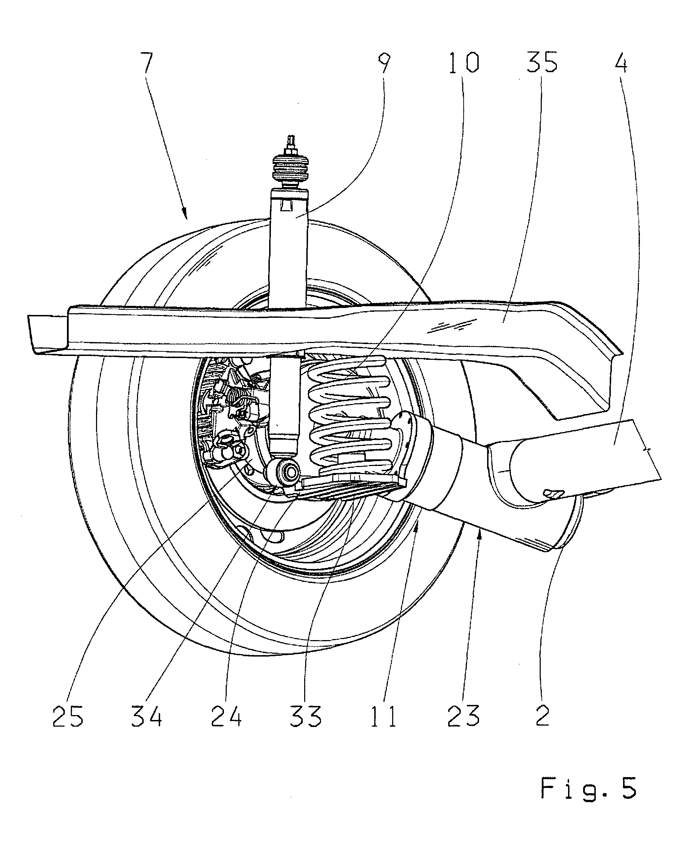

Die Integration des verbundlenkerseitigen Gehäuses 23 in den Längslenker 2 sowie die Befestigung des Dämpfers 9 und der Feder 10 bzw. des Federtellers 33 am Zentralgehäuse 24 wird anhand Figur 5 veranschaulicht. Die Dämpferanbindung ist in Figur 5 mit dem Bezugszeichen 34 versehen; ferner ist in Figur 5 der Karosserielängsträger mit dem Bezugszeichen 35 bezeichnet.

Auf diese Weise wird eine kompakte Bauweise erzielt und es entfällt die Notwendigkeit separater Bauteile, was in einer Reduzierung der Kosten resultiert.

Die hier vorgestellte Antriebsvorrichtung kann auch mit beliebigen Achstypen, beispielsweise mit einer Zentrallenker-, Schräglenker-, oder Längslenkerachse kombiniert werden.

Des Weiteren weist die Antriebsvorrichtung eine geringe Lageranzahl und eine gute Zugänglichkeit auf, wobei sie mit geringer Modifikation einer bestehenden Fahrzeugachse in die Achse integriert werden kann. Beispielsweise muss für den Fall einer Verbundlenkerachse lediglich der Längslenker durch ein modifiziertes Teil ersetzt werden.

Ferner kann die Bremsvorrichtung der Räder als Scheibenbremse oder Trommelbremse ausgeführt sein; die Antriebsvorrichtung kann luftgekühlt oder fluidgekühlt ausgeführt sein, wobei die elektrische Maschine, die Getriebe und die Leistungselektronik eine gemeinsame Kühlung aufweisen können.

**Bezugszeichen**
- 1: Verbundlenker-Hinterachse
- 2: Längslenker
- 3: Längslenker
- 4: Querprofil
- 5: Gummilager
- 6: Gummilager
- 7: Rad
- 8: Rad
- 9: Dämpfer
- 10: Feder
- 11: Antriebsvorrichtung
- 12: elektrische Maschine
- 13: Planetengetriebe
- 14: Kegelradgetriebe
- 15: Rotor
- 16: Stator
- 17: Sonnenrad des Planetengetriebes 13
- 18: Steg des Planetengetriebes 13
- 19: Ritzel des Kegelradgetriebes 14
- 20: Tellerrad des Kegelradgetriebes 14
- 21: Radlagerzapfen
- 22: Radlager
- 23: Verbundlenkerseitiges Gehäuse
- 24: Zentralgehäuse
- 25: radseitiges Gehäuse
- 26: Bremse
- 27: Kegelrollenlager
- 28: Loslagerung
- 29: Lager
- 30: Lager
- 31: Hohlrad des Planetengetriebes 13
- 32: Lagerung des Ritzels 19
- 33: Federteller
- 34: Dämpferanbindung
- 35: Karosserielängsträger

## Patentansprüche

1. Antriebsvorrichtung (11) zum Antreiben eines Rades (7) für ein elektrisch antreibbares Fahrzeug, umfassend eine elektrische Maschine (12) und eine in Kraftflussrichtung im Zugbetrieb betrachtet abtriebsseitig der elektrischen Maschine (12) angeordnete Getriebeeinheit (13, 14), welche ein Kegelradgetriebe (14) und ein Planetengetriebe (13) aufweist, **dadurch gekennzeichnet, dass** die Antriebsvorrichtung an einer Achse, die einen Längslenker (2) aufweist, wie einer Verbundlenkerachse, einer Längslenkerachse, einer Zentrallenkerachse oder einer Schräglenkerachse, angeordnet ist.

2. Antriebsvorrichtung (11) zum Antreiben eines Rades (7) für ein elektrisch antreibbares Fahrzeug, nach Anspruch 1, **dadurch gekennzeichnet, dass** das Kegelradgetriebe (14) und das Planetengetriebe (13) in Kraftflussrichtung im Zugbetrieb betrachtet in der Reihenfolge Planetengetriebe (13) - Kegelradgetriebe (14) angeordnet sind.

3. Antriebsvorrichtung (11) zum Antreiben eines Rades (7) für ein elektrisch antreibbares Fahrzeug, nach Anspruch 2, **dadurch gekennzeichnet, dass** der Rotor (15) der elektrischen Maschine (12) mit dem Sonnenrad (17) des Planetengetriebes (13) verbunden ist, wobei das Hohlrad (31) des Planetengetriebes (13) gehäusefest angeordnet ist, wobei der Steg (18) des Planetengetriebes (13) über eine Stegwelle mit dem Ritzel (19) des Kegelradgetriebes (14) verbunden ist und wobei der Abtrieb der Antriebsvorrichtung (11) über das Tellerrad (20) des Kegelradgetriebes (14) erfolgt, der Radlagerzapfen (21) des Radlagers (22) als Träger für das Tellerrad (20) dient.

4. Antriebsvorrichtung (11) zum Antreiben eines Rades (7) für ein elektrisch antreibbares Fahrzeug, nach Anspruch 2 oder 3, **dadurch gekennzeichnet, dass** das Ritzel (19) des Kegelradgetriebes (14) an der der elektrischen Maschine (12) zugewandten Seite oder an der der elektrischen Maschine (12) abgewandten Seite des Tellerrades (20) angeordnet ist.

5. Antriebsvorrichtung (11) zum Antreiben eines Rades (7) für ein elektrisch antreibbares Fahrzeug, nach Anspruch 2, 3 oder 4, **dadurch gekennzeichnet, dass** die elektrische Maschine (12) als Hohlwellenmotor, d.h. als Innenläufer mit einem als Hohlwelle ausgeführten Rotor (15) ausgeführt ist, wobei das Planetengetriebe (13) an der dem Rad (7) abgewandten Seite der elektrischen Maschine (12) angeordnet ist und die Stegwelle, die den Steg (18) des Planetengetriebes (13) mit dem Ritzel (19) des Kegelradgetriebes (14) verbindet, durch den Hohlraum des Rotors (15) der elektrischen Maschine (12) zum Ritzel (19) geführt wird.

6. Antriebsvorrichtung (11) zum Antreiben eines Rades (7) für ein elektrisch antreibbares Fahrzeug, nach Anspruch 1, **dadurch gekennzeichnet, dass** das Kegelradgetriebe (14) und das Planetengetriebe (13) in Kraftflussrichtung im Zugbetrieb betrachtet in der Reihenfolge Kegelradgetriebe (14) - Planetengetriebe (13) angeordnet sind.

7. Antriebsvorrichtung (11) zum Antreiben eines Rades (7) für ein elektrisch antreibbares Fahrzeug, nach Anspruch 6, **dadurch gekennzeichnet, dass** der Rotor (15) der elektrischen Maschine (12) mit dem Ritzel (10) des Kegelradgetriebes (14) verbunden oder einstückig mit dem Ritzel (19) ausgeführt ist, wobei das Tellerrad (20) des Kegelradgetriebes (14) über eine Welle mit dem Sonnenrad (17) des Planetengetriebes (13) verbunden ist, das Hohlrad (31) des Planetengetriebes (13) gehäusefest angeordnet ist und der Abtrieb des Planetengetriebes (13) über den Steg (18) erfolgt und wobei der Radlagerzapfen (21) des Radlagers (22) als Träger für den Steg (18) des Planetengetriebes (13) dient.

8. Antriebsvorrichtung (11) nach mindestens einem der vorhergehenden Ansprüche, **dadurch gekennzeichnet, dass** die Antriebsvorrichtung (11) auf dem Längslenker (2) zwischen einem Anlagepunkt der Radnabe auf dem Längslenker und dem Anlagepunkt des Längslenkers (2) an der Karosserie angeordnet ist.

9. Antriebsvorrichtung (11) zum Antreiben eines Rades (7) für ein elektrisch antreibbares Fahrzeug, nach mindestens einem der vorangehenden Ansprüche 8 und 9, **dadurch gekennzeichnet, dass** ein Gehäuse (23) der Antriebsvorrichtung (11) direkt mit dem Längslenker (2) der Lenkerachse (1) verbunden ist, in den Längslenker (2) integriert oder mit dem Längslenker (2) einteilig ausgeführt ist.

10. Antriebsvorrichtung (11) zum Antreiben eines Rades (7) für ein elektrisch antreibbares Fahrzeug, nach mindestens einem der vorangehenden Ansprüche 1 bis 10, **dadurch gekennzeichnet, dass** der Dämpfer (9), die Feder (10) und/oder die Bremse (26) an einem Gehäuse (24, 25) der Antriebsvorrichtung (11) befestigt sind.

11. Antriebsvorrichtung (11) zum Antreiben eines Rades (7) für ein elektrisch antreibbares Fahrzeug, nach mindestens einem der vorangehenden Ansprüche 8 bis 11, **dadurch gekennzeichnet, dass** das Gehäuse der Antriebsvorrichtung (11) dreiteilig ausgeführt ist und ein lenkerseitiges Gehäuse (23), ein Zentralgehäuse (24) und ein radseitiges Gehäuse (25) umfasst, wobei die elektrische Maschine (12) im lenkerseitigen Gehäuse (23) angeordnet ist, wobei der Dämpfer (9) und die Feder (10) am Zentralgehäuse (24) befestigt sind und die Bremse (26) am radseitigen Gehäuse (25) befestigt ist.

12. Antriebsvorrichtung (11) zum Antreiben eines Rades (7) für ein elektrisch antreibbares Fahrzeug, nach mindestens einem der vorangehenden Ansprüche 8 bis 12, **dadurch gekennzeichnet, dass** das lenkerseitige Gehäuse (23) der Antriebsvorrichtung (11) direkt mit dem Längslenker (2) der Achse (1) verbunden ist, in den Längslenker (2) integriert oder mit dem Längslenker (2) einteilig ausgeführt ist.

13. Antriebsvorrichtung (11) zum Antreiben eines Rades (7) für ein elektrisch antreibbares Fahrzeug, nach mindestens einem der vorangehenden Ansprüche 8 bis 13, **dadurch gekennzeichnet, dass** die Getriebe eine hohe Übersetzung, insbesondere größer als 10, besonders zwischen 13 und 17, insbesondere um die 16 aufweisen und/oder dass die elektrische Maschine (12) hochdrehend, besonders mit einer maximalen Drehzahl von größer als 5000 Umdrehungen/min, insbesondere zwischen 6000 und 8000 Umdrehungen/min, besonders bevorzugt um 7000 Umdrehungen/min ausgeführt ist..

14. Antriebsvorrichtung (11) zum Antreiben eines Rades (7) für ein elektrisch antreibbares Fahrzeug, nach mindestens einem der vorangegangenen Ansprüche, **dadurch gekennzeichnet, dass** ein Lager, welches eine Welle der elektrischen Maschine abstützt, auch zur Befestigung des Kegelrades dient.

## Claims

1. Drive apparatus (11) for driving a wheel (7) for an electrically drivable vehicle, comprising an electric machine (12) and a transmission unit (13, 14) which is arranged on the output side of the electric machine (12) as viewed in the direction of power flow in the traction mode and has a bevel gear mechanism (14) and a planetary gear mechanism (13), **characterized in that** the drive apparatus is arranged on an axle which has a longitudinal link (2), such as a torsion beam axle, a longitudinal link axle, a central link axle or a semi-trailing link axle.

2. Drive apparatus (11) for driving a wheel (7) for an electrically drivable vehicle, according to Claim 1, **characterized in that** the bevel gear mechanism (14) and the planetary gear mechanism (13) are arranged in the order planetary gear mechanism (13) - bevel gear mechanism (14) as viewed in the direction of power flow in the traction mode.

3. Drive apparatus (11) for driving a wheel (7) for an electrically drivable vehicle, according to Claim 2, **characterized in that** the rotor (15) of the electric machine (12) is connected to the sun gear (17) of the planetary gear mechanism (13), the internal gear (31) of the planetary gear mechanism (13) being arranged such that it is fixed to the housing, the web (18) of the planetary gear mechanism (13) being connected via a web-type shaft to the pinion (19) of the bevel gear mechanism (14), and the output of the drive apparatus (11) taking place via the ring gear (20) of the bevel gear mechanism (14), and the wheel bearing journal (21) of the wheel bearing (22) serving as support for the ring gear (20).

4. Drive apparatus (11) for driving a wheel (7) for an electrically drivable vehicle, according to Claim 2 or 3, **characterized in that** the pinion (19) of the bevel gear mechanism (14) is arranged on that side which faces the electric machine (12) or on that side of the ring gear (20) which faces away from the electric machine (12).

5. Drive apparatus (11) for driving a wheel (7) for an electrically drivable vehicle, according to Claim 2, 3 or 4, **characterized in that** the electric machine (12) is configured as a hollow-shaft motor, that is to say as an internal-rotor motor with a rotor (15) which is configured as a hollow shaft, the planetary gear mechanism (13) being arranged on that side of the electric machine (12) which faces away from the wheel (7), and the web-type shaft which connects the web (18) of the planetary gear mechanism (13) to the pinion (19) of the bevel gear mechanism (14) is guided through the hollow space of the rotor (15) of the electric machine (12) to the pinion (19).

6. Drive apparatus (11) for driving a wheel (7) for an electrically drivable vehicle, according to Claim 1, **characterized in that** the bevel gear mechanism (14) and the planetary gear mechanism (13) are arranged in the order bevel gear mechanism (14) - planetary gear mechanism (13) as viewed in the direction of power flow in the traction mode.

7. Drive apparatus (11) for driving a wheel (7) for an electrically drivable vehicle, according to Claim 6, **characterized in that** the rotor (15) of the electric machine (12) is connected to the pinion (19) of the bevel gear mechanism (14) or is configured in one piece with the pinion (19), the ring gear (20) of the bevel gear mechanism (14) being connected via a shaft to the sun gear (17) of the planetary gear mechanism (13), the internal gear (31) of the planetary gear mechanism (13) being arranged in a manner which is fixed to the housing, and the output of the planetary gear mechanism (13) taking place via the web (18), and the wheel bearing pinion (21) of the wheel bearing (22) serving as support for the web (18) of the planetary gear mechanism (13).

8. Drive apparatus (11) according to at least one of the preceding claims, **characterized in that** the drive apparatus (11) is arranged on the longitudinal link (2) between a bearing point of the wheel hub on the longitudinal link and the bearing point of the longitudinal link (2) on the vehicle body.

9. Drive apparatus (11) for driving a wheel (7) for an electrically drivable vehicle, according to at least one of the preceding Claims 8 and 9, **characterized in that** a housing (23) of the drive apparatus (11) is connected directly to the longitudinal link (2) of the link axle (1), is integrated into the longitudinal link (2) or is configured in one piece with the longitudinal link (2).

10. Drive apparatus (11) for driving a wheel (7) for an electrically drivable vehicle, according to at least one of the preceding Claims 1 to 10, **characterized in that** the damper (9), the spring (10) and/or the brake (26) are fastened to a housing (24, 25) of the drive apparatus (11).

11. Drive apparatus (11) for driving a wheel (7) for an electrically drivable vehicle, according to at least one of the preceding Claims 8 to 11, **characterized in that** the housing of the drive apparatus (11) is configured in three pieces and comprises a link-side housing (23), a central housing (24) and a wheel-side housing (25), the electric machine (12) being arranged in the link-side housing (23), the damper (9) and the spring (10) being fastened to the central housing (24), and the brake (26) being fastened to the wheel-side housing (25).

12. Drive apparatus (11) for driving a wheel (7) for an electrically drivable vehicle, according to at least one of the preceding Claims 8 to 12, **characterized in that** the link-side housing (23) of the drive apparatus (11) is connected directly to the longitudinal link (2) of the axle (1), is integrated into the longitudinal link (2) or is configured in one piece with the longitudinal link (2).

13. Drive apparatus (11) for driving a wheel (7) for an electrically drivable vehicle, according to at least one of the preceding Claims 8 to 13, **characterized in that** the transmission has a high transmission ratio, in particular higher than 10, particularly between 13 and 17, in particular around 16, and/or **in that** the electric machine (12) is configured to rotate at high speeds, particularly with a maximum rotational speed of higher than 5000 rpm, in particular between 6000 and 8000 rpm, particularly preferably around 7000 rpm.

14. Drive apparatus (11) for driving a wheel (7) for an electrically drivable vehicle, according to at least one of the preceding claims, **characterized in that** a bearing which supports a shaft of the electric machine also serves to fasten the bevel gear.

## Revendications

1. Dispositif d'entraînement (11) pour l'entraînement d'une roue (7) pour un véhicule pouvant être entraîné de manière électrique, comprenant un moteur électrique (12) et une unité de transmission (13, 14) disposée du côté de la prise de force du moteur électrique (12), vue dans le sens du flux de forces en mode de traction, laquelle présente une transmission à pignons coniques (14) et une transmission planétaire (13), **caractérisé en ce que** le dispositif d'entraînement est disposé sur un essieu qui présente un bras oscillant longitudinal (2) tel qu'un essieu à traverse déformable en torsion, un essieu à bras oscillants longitudinaux, un essieu à bras oscillants centraux ou un essieu à bras oscillants obliques.

2. Dispositif d'entraînement (11) pour l'entraînement d'une roue (7) pour un véhicule pouvant être entraîné de manière électrique selon la revendication 1, **caractérisé en ce que** la transmission à pignons coniques (14) et la transmission planétaire (13) sont disposées, vues dans le sens du flux de forces en mode de traction, dans l'ordre de succession transmission planétaire (13) - transmission à pignons coniques (14).

3. Dispositif d'entraînement (11) pour l'entraînement d'une roue (7) pour un véhicule pouvant être entraîné de manière électrique selon la revendication 2, **caractérisé en ce que** le rotor (15) du moteur électrique (12) est connecté à la roue solaire (17) de la transmission planétaire (13), la couronne dentée (31) de la transmission planétaire (13) étant disposée de manière fixée au boîtier, le porte-satellites (18) de la transmission planétaire (13) étant connecté par le biais d'un arbre de porte-satellites au pignon (19) de la transmission à pignons coniques (14) et la prise de force du dispositif d'entraînement (11) ayant lieu par le biais de la couronne de différentiel (20) de la transmission à pignons coniques (14), le tourillon de palier de roue (21) du palier de roue (22) servant de support pour la couronne de différentiel (20).

4. Dispositif d'entraînement (11) pour l'entraînement d'une roue (7) pour un véhicule pouvant être entraîné de manière électrique selon la revendication 2 ou 3, **caractérisé en ce que** le pignon (19) de la transmission à pignons coniques (14) est disposé du côté tourné vers le moteur électrique (12) ou du côté de la couronne de différentiel (20) opposé au moteur électrique (12).

5. Dispositif d'entraînement (11) pour l'entraînement d'une roue (7) pour un véhicule pouvant être entraîné de manière électrique selon la revendication 2, 3 ou 4, **caractérisé en ce que** le moteur électrique (12) est réalisé sous forme de moteur à arbre creux, c'est-à-dire sous forme d'induit interne avec un rotor (15) réalisé sous forme d'arbre creux, la transmission planétaire (13) étant disposée du côté du moteur électrique (12) opposé à la roue (7) et l'arbre de porte-satellites qui relie le porte-satellites (18) de la transmission planétaire (13) au pignon (19) de la transmission à pignons coniques (14) étant guidé à travers l'espace creux du rotor (15) du moteur électrique (12) jusqu'au pignon (19).

6. Dispositif d'entraînement (11) pour l'entraînement d'une roue (7) pour un véhicule pouvant être entraîné de manière électrique selon la revendication 1, **caractérisé en ce que** la transmission à pignons coniques (14) et la transmission planétaire (13), vues dans le sens du flux de forces en mode de traction, sont disposées dans l'ordre de succession transmission à pignons coniques (14)- transmission planétaire (13).

7. Dispositif d'entraînement (11) pour l'entraînement d'une roue (7) pour un véhicule pouvant être entraîné de manière électrique selon la revendication 6, **caractérisé en ce que** le rotor (15) du moteur électrique (12) est connecté au pignon (19) de la transmission à pignons coniques (14) ou est réalisé d'une seule pièce avec le pignon (19), la couronne de différentiel (20) de la transmission à pignons coniques (14) étant connectée par le biais d'un arbre à la roue solaire (17) de la transmission planétaire (13), la couronne dentée (31) de la transmission planétaire (13) étant disposée de manière fixée au boîtier et la prise de force de la transmission planétaire (13) ayant lieu par le biais du porte-satellites (18) et le tourillon de palier de roue (21) du palier de roue (22) servant de support pour le porte-satellites (18) de la transmission planétaire (13).

8. Dispositif d'entraînement (11) selon au moins l'une quelconque des revendications précédentes, **caractérisé en ce que** le dispositif d'entraînement (11) est disposé sur le bras oscillant longitudinal (2) entre un point d'appui du moyeu de roue sur le bras oscillant longitudinal et le point d'appui du bras oscillant longitudinal (2) sur la carrosserie.

9. Dispositif d'entraînement (11) pour l'entraînement d'une roue (7) pour un véhicule pouvant être entraîné de manière électrique selon au moins l'une quelconque des revendications précédentes 8 et 9, **caractérisé en ce qu'**un boîtier (23) du dispositif d'entraînement (11) est connecté directement au bras oscillant longitudinal (2) de l'essieu à bras oscillant (1), est intégré dans le bras oscillant longitudinal (2) ou est réalisé d'une seule pièce avec le bras oscillant longitudinal (2).

10. Dispositif d'entraînement (11) pour l'entraînement d'une roue (7) pour un véhicule pouvant être entraîné de manière électrique selon au moins l'une quelconque des revendications précédentes 1 à 10, **caractérisé en ce que** l'amortisseur (9), le ressort (10) et/ou le frein (26) sont fixés sur un boîtier (24, 25) du dispositif d'entraînement (11).

11. Dispositif d'entraînement (11) pour l'entraînement d'une roue (7) pour un véhicule pouvant être entraîné de manière électrique selon au moins l'une quelconque des revendications précédentes 8 à 11, **caractérisé en ce que** le boîtier du dispositif d'entraînement (11) est réalisé en trois parties et comprend un boîtier du côté du bras oscillant (23), un boîtier central (24) et un boîtier du côté de la roue (25), le moteur électrique (12) étant disposé dans le boîtier du côté du bras oscillant (23), l'amortisseur (9) et le ressort (10) étant fixés au boîtier central (24) et le frein (26) étant fixé au boîtier du côté de la roue (25).

12. Dispositif d'entraînement (11) pour l'entraînement d'une roue (7) pour un véhicule pouvant être entraîné de manière électrique selon au moins l'une quelconque des revendications précédentes 8 à 12, **caractérisé en ce que** le boîtier du côté du bras oscillant (23) du dispositif d'entraînement (11) est connecté directement au bras oscillant longitudinal (2) de l'essieu (1), est intégré dans le bras oscillant longitudinal (2) ou est réalisé d'une seule pièce avec le bras oscillant longitudinal (2).

13. Dispositif d'entraînement (11) pour l'entraînement d'une roue (7) pour un véhicule pouvant être entraîné de manière électrique selon au moins l'une quelconque des revendications précédentes 8 à 13, **caractérisé en ce que** les transmissions présentent un rapport de démultiplication élevé, en particulier supérieur à 10, en particulier compris entre 13 et 17, en particulier d'environ 16 et/ou **en ce que** le moteur électrique (12) est réalisé avec un haut régime, en particulier avec un régime maximum supérieur à 5000 tr/m, en particulier compris entre 6000 et 8000 tr/m, particulièrement préférablement d'environ 7000 tr/m.

14. Dispositif d'entraînement (11) pour l'entraînement d'une roue (7) pour un véhicule pouvant être entraîné de manière électrique selon au moins l'une quelconque des revendications précédentes, **caractérisé en ce qu'**un palier qui soutient un arbre du moteur électrique sert également à la fixation du pignon conique.
